# EUROPÄISCHE PATENTSCHRIFT

(11) **EP 1 479 508 B1**
(45) Veröffentlichungstag und Bekanntmachung des Hinweises auf die Patenterteilung: **11.10.2006**
(21) Anmeldenummer: 03011607.3
(22) Anmeldetag: 22.05.2003
(51) Int. Cl.: B29D 30/06, B29C 33/44

(54) **Zweigeteilte Reifenheizform**
Two-piece segmented heating mold for tyres
Moule en deux parties pour le chauffage de pneumatiques

(43) Veröffentlichungstag der Anmeldung: 24.11.2004
(73) Patentinhaber: Continental Aktiengesellschaft, 30165 Hannover (DE)
(72) Erfinder: Marhenke, Uwe, 30989 Gehrden (DE)
(74) Vertreter: Vinazzer, Edith

(56) Entgegenhaltungen:
- EP-A- 1 238 772
- DE-C- 659 900
- DE-C- 869 556
- FR-A- 904 742
- GB-A- 194 214
- US-A- 2 415 291

## Beschreibung

Die Erfindung betrifft eine zweigeteilte Reifenheizform mit einem ersten und einem zweiten Formenteil, welche Formenteile innenseitig mit einer das Profil des Laufstreifens des Reifens ausformenden Strukturierung versehen sind, die gegebenenfalls an eingesetzten Profilringen ausgebildet ist, wobei die Stoßlinie zwischen den beiden Formenteilen bzw. den beiden Profilringen von einem geradlinigen Verlauf abweicht und/oder gegenüber der an der Forminnenseite zentral umlaufenden Mittellinie versetzt ist

Zweigeteilte Reifenheizformen können grundsätzlich zur Vulkanisation aller Reifenarten, wie Diagonal-, Radial-, PKW- und LKW- Reifen oder Vollgummireifen, verwendet werden. Die eine, die untere Formenhälfte ist meist fest auf einem Pressentisch oder dergleichen angeordnet, gegenüber der unteren Formenhälfte ist die zweite, die obere Formenhälfte in vertikaler Richtung zum Öffnen und Schließen bewegbar. Die Formenteilung erfolgt derart, dass die Stoßlinie bzw. die Trennungslinie der beiden Formenteile bzw. der beiden Profilringe entlang der zentralen Mittelumfangslinie der Form und somit auch des zu formenden Reifens und, bezogen auf die Reifenheizform, entlang eines Kreises verläuft. Bei bekannten zweigeteilten Reifenheizformen ergeben sich einerseits Schwierigkeiten beim endgültigen Bombieren des Reifens nach dem Schließen der Form und beim Ausformen nach erfolgter Vulkanisation. In beiden Fällen muss der Reifen deformiert werden, was beim Bombieren zu Fließvorgängen in der Lauffläche, zu Gürtelverlagerungen oder dergleichen führen kann. Beim Ausformen des Reifens können Ausbrüche, Risse und dergleichen an der Lauffläche auftreten. Diese Probleme treten dabei umso stärker auf, je steifer der Laufflächenbereich eines Reifen ist, insbesondere dann, wenn dieser Bereich durch einen Gürtel versteift ist. Bestimmte Profilgeometrien und Profilausführungen sind aus diesem Grund nicht realisierbar, da ein Ausformen des Reifens ohne Beschädigung nicht möglich wäre.

Aus der DE 659 900 C ist eine Vulkanisierform für Luftreifen bekannt, welche versetzte Trennfugen aufweist. Dabei ist die Trennfläche jeder Formhälfte zur Hälfte oberhalb und zur Hälfte unterhalb gegenüber der Mittelebene des Reifens versetzt. Damit soll erreicht werden, dass der Reifen mit dem Öffnen der Form zwangsläufig aus den Formwandlungen herausgerissen wird, wobei durch den Versatz der Trennfläche der Form der Reifen in einer Diagonalstellung zur Form herausgehoben werden soll. Ja nach Profilgeometrie wird das Entformen des fertig vulkanisierten Reifens nicht ohne Beschädigungen im Profilbereich möglich sein. Die DE 869 556 C befasst sich mit einer Vulkanisierform für Fahrzeugreifen aus zwei Formkastenhälften, wobei die geradlinig umlaufende Trennfuge gegenüber der zentral umlaufenden Mittellinie einseitig versetzt ist.

Auch bei der aus der GB 194 214 A bekannten zweigeteilten Reifenheizform sind die beiden Formteile derart ausgeführt, dass die geradlinig umlaufende Stoßlinie zwischen den beiden Formenteilen gegenüber der zentral umlaufenden Mittellinie versetzt ist. Dieser Versatz wird an ein spezielles Laufstreifenprofil des Reifens angepasst, um im Bereich der Trennfuge zwischen den beiden Formteilen zu verhindern, dass hier austretendes Kautschukmaterial in Vertiefungen von Profilböcken hineinfließt.

Der Erfindung liegt die Aufgabe zu Grunde, eine zweigeteilte Reifenheizform derart auszuführen, dass ein Ausformen des vulkanisierten Reifens wesentlich leichter und insbesondere ohne Beschädigung des Reifens möglich ist.

Gelöst wird die gestellte Aufgabe erfindungsgemäß dadurch, dass die Stoßlinie der beiden Formenteile oder der beiden Profilringe abwechselnd ineinander greifende Vor- und Rücksprünge der Formenteile oder der Profilringe bildet.

Die Erfindung beruht daher auf der Erkenntnis, dass durch ein gezieltes Ausführen der Formenteile bzw. der Profilringe derart, dass ihre Stoß- bzw. Trennungslinie als eine Aneinanderreihung von abwechselnd ineinander greifenden Vor- und Rücksprüngen abweichend von der zentralen Mittelumfangslinie verläuft, eine Anpassung der Profilringe an die Profilgeometrie ermöglicht wird, durch welche der fertig vulkanisierte Reifen wesentlich leichter ausformbar ist als bei herkömmlich ausgeführten zweigeteilten Reifenheizformen. Da die Stoßlinie zwischen den beiden Formenteilen bzw. Profilringen an die jeweilige Profilgeometrie angepasst werden kann, können in zweigeteilten Reifenformen auch Reifen mit Profilgeometrien geheizt werden, die bislang aus Gründen der nicht möglichen beschädigungsfreien Entformbarkeit mit derartigen Reifenheizformen nicht vulkanisiert werden konnten.

Bei einer bevorzugten Ausführungsform der Erfindung wird die Stoßlinie eine Zick-Zack-Form, eine Wellenform, Kombinationen dieser Formen, sowie beliebige andere eckige und / oder runde Formen aufweisen.

Die aneinander stoßenden Bereiche der Formenteile bzw. der Profilringe können dabei derart ausgeführt sein, dass beim Formschluss eine Zentrierung der Formenteile erfolgt, die weitere Maßnahmen zur Formzentrierung überflüssig machen. Dabei wird auch das Auftreten eines unerwünschten geometrischen Profilversatzes am Reifen vermieden.

Die Stoßlinie kann auch gegenüber der zentralen Mittellinie in eine Richtung, in Richtung des einen oder anderen Formenteiles, gegebenenfalls unter zumindest teilweiser Beibehaltung des geradlinigen Verlaufes, versetzt sein. Dabei kann auch bei einer versetzten Stoßlinie ein wellen-, zick-zack- oder ähnlicher Verlauf gewählt werden.

Weitere Merkmale, Vorteile und Einzelheiten der Erfindung werden nun anhand der Zeichnung, die schematisch ein Ausführungsbeispiel darstellt, näher beschrieben. Dabei zeigen
Fig. 1 einen Teilschnitt durch eine in der Mitte geteilte geschlossene Reifenheizform,
Fig. 2 einen Teilschnitt durch die Reifenheizform beim Schließvorgang,
Fig. 3 eine Draufsicht auf Abschnitte von Profilringen gemäß dem bekannten Stand der Technik
Fig. 4 eine Draufsicht auf Abschnitte erfindungsgemäß ausgeführter Profilringe.

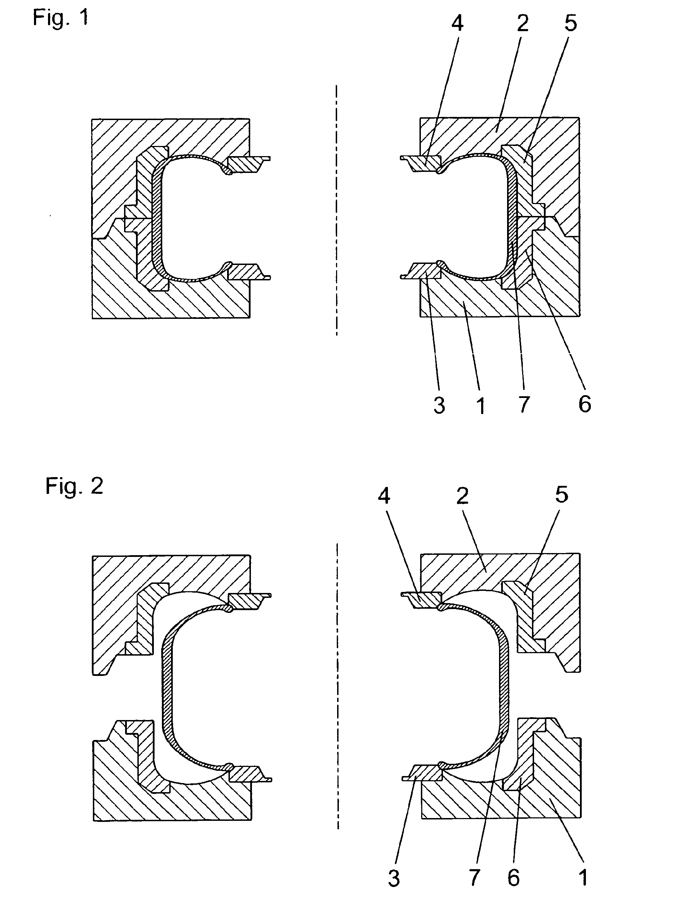

Fig. 1 und 2 zeigen einige Bestandteile einer mittig geteilten Reifenheizform im Schnitt, Fig. 2 mit bereits eingelegtem Reifen, jedoch noch nicht zur Gänze geschlossen und Fig. 1 in der geschlossenen Lage.

Die in Fig. 1 und 2 gezeigte mittig geteilte Reifenheizform weist eine untere Formenhälfte 1 auf, welche an einem nicht dargestellten Pressentisch oder dergleichen befestigt ist. An der unteren Formenhälfte 1 ist ein unterer Wulstring 3 angeordnet. Die obere Formenhälfte 2 ist gegenüber der unteren Formenhälfte 1 in vertikaler Richtung mittels nicht dargestellter Mechanismus zum Öffnen und Schließen der Form bewegbar. An der oberen Formenhälfte 2 ist ein oberer Wulstring 4 erkennbar. An der Innenseite der beiden Formenhälften 1, 2 sind zwei Profilringe 5, 6 eingesetzt, welche als "Negativ" des zu bildenden Laufstreifenprofils des Reifens ausgeführt sind. So werden beispielsweise über vorspringende Stege im Reifen Nuten, über Lamellenbleche dünne Einschnitte gebildet. Die an die Profilringe 5, 6 anschließenden Innenwandbereiche der beiden Formenhälften 1, 2 formen die Reifenseitenwände, die Wulstringe 3, 4 die Wulstbereiche.

Fig. 1 zeigt die Reifenheizform im geschlossenen Zustand, der Reifen 7 wird über einen nicht gezeigten Balg von innen her gegen die Innenwände der Profilringe 5, 6 gepresst, wodurch im Bereich des Laufstreifens die Profilierung eingedrückt wird. Nach der Vulkanisation des Reifens unter Zufuhr eines Heizmediums werden die Form geöffnet und der Reifen entnommen.

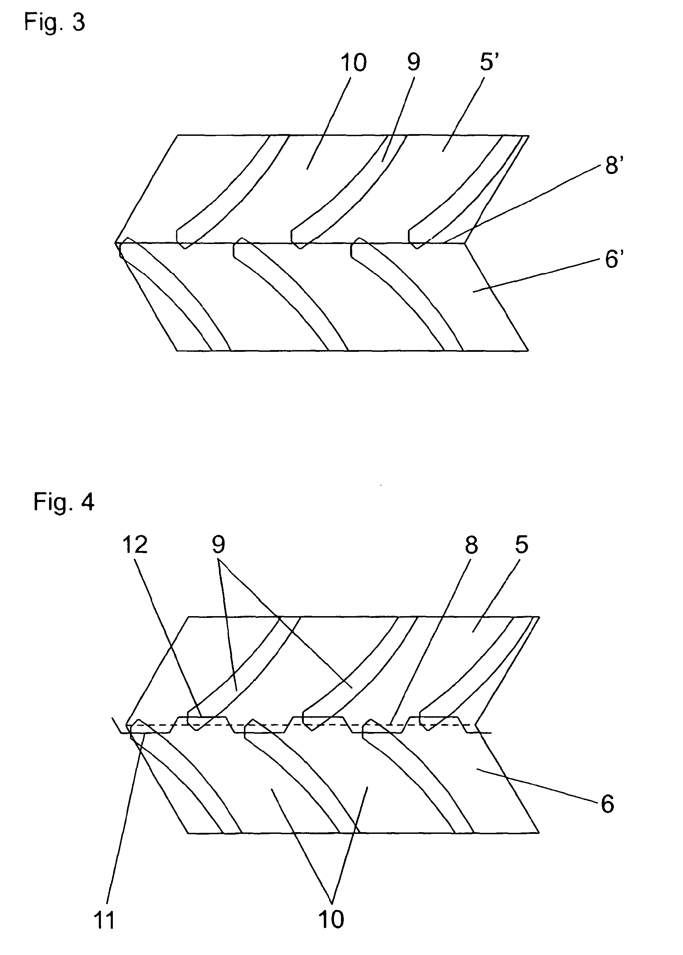

Fig. 3 zeigt einen Ausschnitt einer Draufsicht auf ein Beispiel der Ausführung von Profilringen 5', 6' nach dem Stand der Technik. Die Stoßlinie zwischen den beiden Profilringen 5', 6' verläuft entlang einer kreisförmig in der Form umlaufenden Trennungslinie 8'. Die Trennungslinie 8' entspricht der Mittelumfangslinie des Reifens.

Die Profilringe 5', 6' sind im Beispiel derart ausgebildet, dass sie das Profil eines Ackerschlepperreifens abformen. Diese Reifen weisen typischerweise ein aus zwei Reihen von Stollen bestehendes Profil auf. Somit weist jeder Profilring 5', 6' je eine Reihe von Vertiefungen 9 auf, die durch dazwischenliegende und gegenüber diesen Vertiefungen 9 erhabene Bereiche 10 getrennt sind. Dadurch, dass die Stollen im Reifen bis über die zentrale Mittelumfangslinie hinausreichen, sind auch die die Stollen bildenden Vertiefungen 10 in den Profilringen 5', 6' jeweils ein kleines Stück noch im anderen Profilring 5', 6' vorhanden.

Das in Fig. 3 gezeigte Ausführungsbeispiel ist eine jener Ausführungen, bei welchen bei der Entformung des bereits fertig vulkanisierten Reifens das Profil, hier sind es die gebildeten Stollen, den Ausformprozess im Bereich der Stoßstelle der Profilringe 5', 6' behindern. Um ein Ausformen aus der Reifenheizform überhaupt zu erreichen, kann sogar ein manuelles Ausbrechen des fertigen Reifens aus der Reifenheizform erforderlich sein. In jedem Fall besteht die Gefahr, dass Beschädigungen am fertigen Reifen entstehen, die entweder, je nach Reifen, eine Reparatur erfordern oder auch das fertige Produkt unbrauchbar machen.

Fig. 4 zeigt Profilringe 5 ,6, die das gleiche Profil wie die in Fig. 3 gezeigten Profilringe abformen. Wie Fig. 4 zeigt, wird gemäß der Erfindung aber die Trennung der beiden Profilringe 5, 6 nicht in geradliniger Form durchgeführt, sondern entlang einer der Profilgeometrie besser angepassten Linie. Die Profilringe 5, 6 sind derart ausgeführt, dass sie im Bereich ihrer Stoßlinie ineinander eingreifen, indem abwechselnd Vorsprünge 11 und Rücksprünge 12 vorgesehen sind, die sich aus schrägen Flanken und diese verbindenden geraden Linienabschnitten, die parallel zur Mittellinie 8 verlaufen, zusammensetzen. Im Bereich der Vor- und Rücksprünge 11 ,12 liegen die Endbereiche der die Stollen bildenden Vertiefungen 9, die jeweils in den anderen Profilringe 5, 6 ausgebildet sind. Die Stoßlinie der beiden Profilringe 5, 6 weist somit eine Art Zick-Zack-Form auf, die eine Behinderung beim Ausformprozess vermeidet. Ein Reifen mit dieser Profilierung lässt sich daher ohne Gefahr des Entstehens von Beschädigungen der Heizform entnehmen.

Die Erfindung ist auf das dargestellte Ausführungsbeispiel nicht eingeschränkt. Es ist eine Vielzahl von Ausführungen der Stoßstelle zwischen den beiden Profilringen möglich. Wesentlich ist, dass der Stoßbereich und die Form der Stoßlinie zwischen den beiden Profilringen 5, 6 an die Profigeometrie individuell angepasst werden, um den Ausformvorgang zu erleichtern. Die Stoßlinie zwischen den beiden Profilringen 5, 6 kann daher auch unregelmäßig ausgeführte Wellen- oder Zick-Zack-Formen und dergleichen aufweisen. Die Erfindung erfasst auch Ausführungen, bei welchen zumindest teilweise eine geradlinige Stoßlinie gegenüber der Mittellinie der Heizform in eine Richtung, einige Millimeter bis zu einigen Zentimetern versetzt ist. Der Versatz kann bis zu einem Drittel der größten Innenbreite der Form betragen. Die Profilringe weisen dann zumindest teilweise unterschiedliche Breiten auf. Erfindungsgemäß können auch Formen ausgeführt sein, bei welchen keine Profilringe vorgesehen sind sondern sogenannte gravierte Formenteile verwendet werden. Nach der Erfindung ausgeführte Heizformen können auch solche sein, die keine Wulstringe aufweisen und / oder ein balgloses Vulkanisieren gestatten.

## Patentansprüche

1. Zweigeteilte Reifenheizform mit einem ersten und einem zweiten Formenteil (1, 2), welche Formenteile (1, 2) innenseitig mit einer das Profil des Laufstreifens des Reifens ausformenden Strukturierung versehen sind, die gegebenenfalls an eingesetzten profilringen (5, 6) ausgebildet ist, wobei die Stoßlinie (8) zwischen den beiden Formenteilen (1, 2) bzw. den beiden Profilringen (5, 6) von einem geradlinigen Verlauf abweicht und/oder gegenüber der an der Forminnenseite zentral umlaufenden Mittellinie versetzt ist,
**dadurch gekennzeichnet,**
**dass** die Stoßlinie der beiden Formenteile (1, 2) oder der beiden Profilringe (5, 6) abwechselnd ineinander greifende Vor- und Rücksprünge (11, 12) der Formenteile (1, 2) oder der Profilringe (5, 6) bildet.

2. Rolfenheizform nach Anspruch 1, **dadurch gekennzeichnet, dass** die Stoßlinie (8) zumindest teilweise eine Zick-Zack-Form, eine Wellenform oder Kombinationen dieser Formen aufweist.

## Claims

1. Two-piece segmented heating mould for tyres, comprising a first and a second mould part (1, 2), which mould parts (1, 2) are provided on the inner side with a structurization which shapes the profile of the tyre tread and which, where appropriate, is configured on inserted profile rings (5, 6), the joining line (8) between the two mould parts (1, 2), or between the two profile rings (5, 6), diverging from a straight-line course and/or being offset relative to the centre line running centrally around the inner side of the mould, **characterized in that** the joining line of the two mould parts (1, 2) or of the two profile rings (5, 6) forms alternately interlocking projections and recesses (11, 12) of the mould parts (1, 2) or of the profile rings (5, 6).

2. Heating mould for tyres according to Claim 1, **characterized in that** the joining line (8) has, at least in part, a zigzag shape, a wave shape or combinations of these shapes.

## Revendications

1. Moule en deux parties pour le chauffage de pneumatiques, comprenant une première partie de moule et une deuxième partie de moule (1, 2), lesquelles parties de moule (1, 2) sont pourvues du côté intérieur d'une structuration constituant le profil de la bande de roulement du pneumatique, qui est réalisée éventuellement sur des anneaux profilés insérés (5, 6), la ligne de joint (8) entre les deux parties de moule (1, 2) ou les deux anneaux profilés (5, 6) s'écartant d'une allure rectiligne et/ou étant décalée par rapport à l'axe médian périphérique central sur le côté intérieur du moule,
**caractérisé en ce que**
la ligne de joint des deux parties de moule (1, 2) ou des deux anneaux profilés (5, 6) forme en alternance des saillies et des retraits (11, 12) venant en prise les uns dans les autres des parties de moule (1, 2) ou des anneaux profilés (5, 6) .

2. Moule pour le chauffage de pneumatiques selon la revendication 1, **caractérisé en ce que** la ligne de joint (8) présente au moins en partie une forme en zigzag, une forme ondulée ou des combinaisons de ces formes.
